(19) Europäisches Patentamt
European Patent Office
Office européen des brevets

(11) EP 1 311 650 B1

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(51) Int Cl.:
***C09J 153/00*** *(2006.01)* ***C08F 293/00*** *(2006.01)*
***C08F 297/02*** *(2006.01)*

(21) Anmeldenummer: **01971799.0**

(22) Anmeldetag: **27.07.2001**

(86) Internationale Anmeldenummer:
**PCT/EP2001/008738**

(87) Internationale Veröffentlichungsnummer:
**WO 2002/010308 (07.02.2002 Gazette 2002/06)**

(54) **HAFTKLEBEMASSEN AUF BASIS VON BLOCKCOPOLYMEREN DER STRUKTUR P(A/C)-P(B)-P(A/C)**

ADHESIVE MATERIAL BASED ON BLOCK COPOLYMERS HAVING A STRUCTURE P(A/C)-P(B)-P(A/C)

SUBSTANCES ADHESIVES A BASE DE COPOLYMERES BLOCS DE STRUCTURE P(A/C)-P(B)-P(A/C)

(84) Benannte Vertragsstaaten:
**DE ES FR GB IT**

(30) Priorität: **28.07.2000 DE 10036803**

(43) Veröffentlichungstag der Anmeldung:
**21.05.2003 Patentblatt 2003/21**

(73) Patentinhaber: **tesa SE**
**22848 Norderstedt (DE)**

(72) Erfinder:
- **HUSEMANN, Marc**
**22605 Hamburg (DE)**
- **ZÖLLNER, Stephan**
**22043 Hamburg (DE)**

(56) Entgegenhaltungen:
**EP-A- 0 298 667** **EP-A- 0 660 187**
**EP-A- 0 921 170** **EP-A- 1 008 640**
**US-A- 5 314 962** **US-A- 5 403 658**
**US-A- 5 763 548** **US-A- 5 807 937**

EP 1 311 650 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Hersteallung eines Haftklebebandes mit einer Haftklebemasse auf der Basis von Blockcopolymeren des allgemeinen Typs P(A/C)-P(B)-P(A/C).

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel weiter steigen. Daher sollten Lösungsmittel so weit wie möglich aus dem Fertigungsprozeß für Haftklebebänder eliminiert werden. Durch die damit verbundene Einführung der Hotmelt-Technologie werden immer höhere Anforderungen an die Klebemassen gestellt. Insbesondere Acryfathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen diese Acrylathaftklebemassen aber auch hohen Anforderungen im Bereich der Scherfestigkeit und der Klebkraft gerecht werden. Dieses Anforderungsprofil wird durch Polyacrylate mit hohem Molekulargewicht, hoher Polarität und anschließender effizienter Vernetzung erreicht. Diese sehr scherfesten und polaren Haftklebemassen besitzen aber den Nachteil, daß sie für den Hotmelt-Extrusionsprozeß nicht gut geeignet sind, da hohe Anwendungstemperaturen erforderlich sind und da außerdem durch Scherung im Extruder das Molekulargewicht des Polymers abgebaut wird. Durch diese Schädigung wird das klebtechnische Niveau deutlich herabgesetzt. Die Klebkraft und die Anfaßklebrigkeit (Tack) sind in der Regel gering, da die Glasübergangstemperatur durch die polaren Anteile in den Klebemassen relativ hoch liegt. Besonders die Scherfestigkeiten der Hotmelt-beschichteten Acrylathaftklebemassen fallen - im Vergleich zur ursprünglichen mit Lösungsmittel beschichteten Haftklebemasse - deutlich ab. Daher werden zur Zeit unterschiedliche Konzepte zur Verringerung der Fließviskosität und damit der leichteren Extrusionsbeschichtung dieser Haftklebemassen untersucht.
In der Technik werden verschiedene Konzepte verfolgt, um dieses Ziel zu erreichen. Eine Möglichkeit dazu ist die sehr effiziente Vernetzung einer niedrigviskosen und unpolaren Acrylatklebemasse erst auf dem Träger. Acrylate mit elektronendrückenden Gruppen werden copolymerisiert und stabilisieren während der UV- oder ESH-Vernetzung (ESH: Elektronenstrahlhärtung) entstehende Radikale. Beispiele hierfür sind tertiäre Amine enthaltende Monomere [WO 96/35725], tertiäres Butylacrylamid als Monomer [US 5,194,455] und Tetrahydrofurylacrylate [EP 0 343 467 B1]. Ein weiteres Konzept der effizienten Vernetzung ist die Copolymerisation von UV-Photoinitiatoren in die Polyacrylatkette. So wurde z.B. Benzoinacrylat als Comonomer eingesetzt und die Vernetzung auf dem Träger mit UV-Licht durchgeführt [DE 27 43 979 A1]. In der US 5,073,611 wurden dagegen Benzophenon und Acetophenon als copolymerisierbare Monomere verwendet.
Eine sehr effiziente Vernetzung findet strahlenchemisch bei Doppelbindungen enthaltenden Polyacrylaten statt [US 5,741,543].
Styrol-Isopren-Styrol-Blockcopolymere (SIS) sind dagegen weit verbreitete Elastomere für Hotmelt-verarbeitbare Haftklebemassen [Herstellverfahren: US 3,468,972; US 3,595,941; Anwendung in Haftklebemassen: US 3,239,478; US 3,935,338]. Die gute Verarbeitbarkeit wird durch ein geringeres Molekulargewicht und durch eine spezielle Morphologie erreicht [EP 0451 920 B1]. Diese Haftklebemassen sind sehr gut mit UV-Licht unter Anwesenheit von Photoinitiatoren oder mit Elektronenstrahlung vernetzbar, da die Mittelblöcke eine Vielzahl von Doppelbindungen enthalten.
Dennoch besitzen diese Elastomere Nachteile, wie beispielsweise die starke Alterung unter UV-Licht (also auch im Tageslicht) und in einer Sauerstoff/Ozon-haltigen Atmosphäre. Eine weitere für die Anwendung sehr ungünstige Eigenschaft ist die relativ geringe Wärmescherfestigkeit. Diese Haftklebemassen sind daher für längerfristige Außenverklebungen und für Anwendungen in höheren Temperaturbereichen nicht geeignet. Dasselbe gilt auch für andere Blockcopolymere, die einen zumindest eine Doppelbindung enthaltenden Mittelblock besitzen [US 5,851,664].
Eine Lösung der Alterungsproblematik, der Hotmeltverarbeitbarkeit, der hohen Kohäsion und der effizienten strahlenchemischen Vernetzung liefert die Kombination aus SIS-Polymeren und Polyacrylaten. So wurden in der US H1,251 Acrylat-enthaltende Dien-Copolymere für Hotmelt-Anwendungen beschrieben, die jedoch ebenfalls - bedingt durch die hohe Anzahl der verbleibenden Doppelbindungen - der Alterung unterliegen.

In der US 5,314,962 werden A-B-A-Blockcopolymere als Elastomere für Klebemassen beschrieben, die aber als kohäsionsbildendes Kriterium nur die A-Domänenbildung besitzen und somit - insbesondere bei hohen Temperaturen - nicht sehr scherfest sind.
In der EP 0 921 170 A1 werden A-B-A-Blockcopolymere beschrieben, die mit Harzzusätzen modifiziert wurden. Hier wurde nicht vernetzt, so daß auch in diesem Fall die Scherfestigkeit der beschriebenen Haftklebemassen nur sehr gering ist. EP1008640 offenbart Haftklabemassen auf Basis von Blockcopolymeren, und ein Verfahren zur Herstellung davon.
Aufgabe der Erfindung ist es daher, verbesserte Haftklebemassen und Haftklebeband auf Polyacrylatbasis zur Verfügung zu stellen, die die Nachteile des Standes der Technik nicht oder nur in verminderter Weise aufzeigen, die also auch im vernetzten Zustand eine geringe Alterung zeigen, und die insbesondere für die Verarbeitung im Heißschmelzverfahren und für die Verwendung als Heißschmelzkleber geeignet sind, ohne daß dabei die für die Verwendung als Haftklebemasse günstigen Eigenschaften verloren gehen.

Gelöst wird die Aufgabe durch das Verfahren zur Herstallung von Haftklebebändern, wie sie im Hauptanspruch dargestellt wird.

Dementsprechend betrifft der Hauptanspruch ein Verfahren zur Herstellung eines Haftklebebandes mit einer Haftklebemasse auf der Basis von Blockcopolymeren des allgemeinen Typs P(A/C)-P(B)-P(A/C), wobei jedes Blockcopolymer aus einem mittleren Copolymer-Block P(B) und zwei Endpolymerblöcken P(A/C) besteht, und wobei

- P(B) einen (Co-)Polymerblock repräsentiert, erhältlich aus einer Komponente B, welche aus zumindest einem Monomer B1 besteht, wobei die Glasübergangstemperatur des (Co-)Polymerblocks P(B) nicht höher als 0 °C ist,
- P(A/C) einen Copolymerblock repräsentiert, erhältlich aus einer Komponente A/C, welche aus zumindest zwei Monomeren A1 und C1 besteht, wobei der Copolymerblock P(A/C) eine Glasübergangstemperatur von 20 °C bis 175 °C besitzt, und wobei das zumindest eine Monomer C1 zumindest eine zur Vernetzung befähigte funktionelle Gruppe enthält,
- der (Co-)Polymerblock P(B) in dem (Co-)Polymerblock P(A) unlöslich ist, die (Co-)Polymerblöcke P(A) und P(B) nicht mischbar sind.

In einer ersten vorteilhaften Ausführungsform dieser Erfindung ist die zur Vernetzung befähigte funktionelle Gruppe der Monomere C1 eine ungesättigte Gruppe, welche zur strahlenchemischen Vernetzung befähigt ist, insbesondere zu einer Vernetzung, welche durch UV-Bestrahlung oder durch Bestrahlung mit Elektronenstrahlen hervorgerufen wird. Dies kann in besonders günstiger Weise ein ungesättigter Alkylrest sein, der mindestens eine C-C-Doppelbindung aufweist.
Für mit Doppelbindungen modifizierte Acrylate eignen sich besonders vorteilhaft im erfinderischen Sinne acrylierte Zimtsäureester.

Eine weitere sehr günstige Ausführungsform der Haftklebemasse besitzt solche zur Vernetzung befähigten funktionellen Gruppen der Monomere C1, welche durch den Einfluß thermischer Energie zu einer Vernetzungsreaktion befähigt sind.

Sehr bevorzugt für die Haftklebemasse sind die zur thermischen Vernetzung befähigten funktionellen Gruppen Hydroxy-, Carboxy-, Epoxy-, Säureamid-, Isocyanato- oder Aminogruppen.

Als Monomere C1 werden in bevorzugter Weise Acrylmonomere oder Vinylmonomere eingesetzt, die die Glasübergangstemperatur des Copolymerblocks P(A/C) - auch in Kombination mit den Monomeren A1 - auf oberhalb 20 °C heraufsetzen.

Besonders bevorzugte Beispiele für Monomere C1 sind acrylierte Photoinitiatoren, wie z.B. Benzoinacrylat oder acryliertes Benzophenon, Hydroxyethylmethacrylat, Hydroxypropylmethacrylat, Acrylsäure, Methacrylsäure, Allylalkohol, Maleinsäureanhydrid, Itaconsäureanhydrid, Itaconsäure, Acrylamid und Glyceridylmethacrylat, wobei diese Aufzählung nicht abschließend ist.

Als Monomere für die Komponente B werden vorteilhaft Acrylmonomere oder Vinylmonomere auch in Kombination miteinander eingesetzt, wobei die Glasübergangstemperatur des Mittelblockes unterhalb 0 °C liegt.
In einer sehr vorteilhaften Ausführungsform der erfindungsgemäßen Haftklebemasse werden als Monomere für die Komponente B eine oder mehrere Verbindungen, welche sich durch die folgende allgemeine Formel beschreiben lassen, eingesetzt.

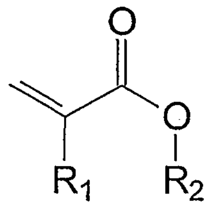

Dabei ist $R_1$ = H oder $CH_3$, der Rest $R_2$ wird gewählt aus der Gruppe der verzweigten oder unverzweigten, gesättigten Alkylgruppen mit 4 bis 14 Kohlenstoffatomen.
Acrylmomonere, die bevorzugt für die erfinderische Haftklebemasse als Komponente B eingesetzt werden, umfassen Acryl- und Methacrylsäureester mit Alkylgruppen bestehend aus 4 bis 14 C-Atomen, bevorzugt 4 bis 9 C-Atomen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat und deren verzweigten Isomere, wie z.B. 2-Ethylhexylacrylat.
Weiterhin werden optional als Monomere für die Komponente B Vinylmonomere aus den folgenden Gruppen eingesetzt:

Vinylester, Vinylether, Vinylhalogenide, Vinylidenhalogenide, Vinylverbindungen mit aromatischen Cyclen und He-

terocyclen in $\alpha$-Stellung.

Auch hier seien nicht ausschließlich einige Beispiele genannt: Vinylacetat, Vinylformamid, Vinylpyridin, Ethylvinylether, Vinylchlorid, Vinylidenchlorid, Acrylonitril.

Als Monomere A1 werden bevorzugt Monomere gewählt, die in der Lage sind, eine 2-Phasen-Domänenstruktur mit den Copolymer-Blöcken P(B) auszubilden. Im Extremfall sind A1 und C1 identisch. Grundvoraussetzung hierfür ist die Nichtmischbarkeit der Blöcke P(B) mit den Blöcken P(A/C). In der 2-Phasen-Domänenstruktur bilden sind Bereiche aus, in denen sich die P(A/C)-Blöcke unterschiedlicher (und gegebenenfalls auch gleicher) Ketten miteinander mischen. Diese sogenannten Domänen sind eingebettet in einer P(B)-Matrix. Als Charakteristikum besitzt eine solche 2-Phasen-Domänenstruktur zwei Glasübergangstemperaturen.

Mit der Ausbildung zweier Phasen unterschiedlicher Eigenschaften erhält man harte Blöcke P(A/C) neben weichen Blöcken P(B).

Vorteilhafte Beispiele für Verbindungen, welche als Monomere A1 eingesetzt werden, sind Vinylaromaten, Methylmethacrylate, Cyclohexylmethacrylate, Isobornylmethacrylate oder Acrylsäure. Besonders bevorzugte Beispiele für die Monomere A1 sind Methyl-methacrylat und Styrol.

Ein weiteres bevorzugtes Charakteristikum dieser Blockcopolymere P(A/C)-P(B)-P(A/C) ist, daß das Molekulargewicht zwischen 5.000 und 600.000 g/mol, mehr bevorzugt zwischen 10.000 und 300.000 g/mol liegt: Der Anteil der Polymerblöcke P(A/C) liegt vorteilhaft zwischen 10 und 60 Gewichtsprozent des gesamten Blockcopolymers, mehr bevorzugt zwischen 15 und 40 Gewichtsprozent. Der Gewichtsanteil der Monomere C1 liegt im Verhältnis zu den Monomeren A1 in sehr vorteilhafter Weise zwischen 0,1 und 20, mehr bevorzugt zwischen 0,5 und 5.

Die Blockcopolymere werden durch Kontrollierten Polymerisation über den RAFT-Prozess (Rapid Addition-Fragmentation Chain Transfer) hergestellt. Zur Herstellung kann z.B. ein difunktioneller Initiator verwendet werden, der in einem Schritt die Polymerisation der Monomerern B1 initiiert und dann in einem zweiten Schritt die Komponente A/C zur Einführung der Endblöcke einpolymerisiert (II), wobei die Zwischenstufe optional isoliert werden kann. I-R-I stellt in der folgenden Reaktionsgleichung den difunktionellen Initiator mit den funktionellen Gruppen I dar.

$$\text{I-R-I} \xrightarrow{B} \text{I-P(B)-R-P(B)-I} \xrightarrow{A/C} \text{I-P(A/C)-P(B)-R-P(B)-P(A/C)-I} \qquad \text{(II)}$$

Weiterhin kann das Dreiblockcopolymer durch Radikalrekombination der Makromonomere P(A/C)-P(B)* hergestellt werden (III).

$$2\text{P(A/C)-P(B)}^* \rightarrow \text{P(A/C)-P(B)-P(B)-P(A/C)} \qquad \text{(III)}$$

Bevorzugt können zur Polymerisation der Blockcopolymere Nitroxid-Regler zur Radikalkontrolle eingesetzt werden. Die Polymerisation kann in Gegenwart eines oder mehrerer organischer Lösungsmittel und/oder in Gegenwart von Wasser oder in Substanz durchgeführt werden. Bevorzugt wird so wenig Lösungsmittel wie möglich eingesetzt. Die Polymerisationszeit beträgt - je nach Umsatz und Temperatur - zwischen 6 und 48 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Für die Polymerisation in wäßrigen Medien bzw. Gemischen aus organischen und wäßrigen Lösungsmitteln werden zur Polymerisation bevorzugt Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische eignen sich hervorragend. Zur Radikalstabilisierung werden Nitroxide des Typs (IVa) oder (IVb) eingesetzt:

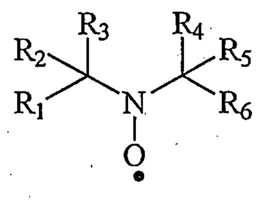

(IVa)

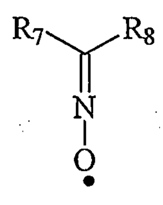

(IVb)

wobei $R_1$, $R_2$, $R_3$, $R_4$, $R_5$, $R_6$, $R_7$, $R_8$ unabhängig voneinander folgende Verbindungen oder Atome bedeuten:

i) Halogenide, wie z.B. Chlor, Brom oder Iod

ii) lineare, verzweigte, cyclische und heterocyclische Kohlenwasserstoffe mit 1 - 20 Kohlenstoffatomen, welche gesättigt, ungesättigt und aromatisch sein können,

iii) Ester-$COOR_9$, Alkoxide -$OR_{10}$ und/oder Phosphonate -$PO(OR_{11})_2$, wobei $R_9$, $R_{10}$ oder $R_{11}$ für Reste aus der Gruppe ii) stehen.

Die Verbindungen (IVa) oder (IVb) können auch an Polymerketten jeglicher Art gebunden sein und somit zum Aufbau der Blockcopolymere als Makroradikale oder Makroregler genutzt werden. Derartige Makromoleküle können beispielsweise während des Polymerisationsprozesses entstehen.

Mehr bevorzugt werden kontrollierte Regler für die Polymerisation Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyl-oxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- T-Butyl-t-amyl Nitroxid

Der RAFT Prozeß ist in den WO 98/01478 und WO 99/31144 ausführlich beschrieben. Zur Herstellung von Blockcopolymeren eignen sich besonders vorteilhaft Trithiocarbonate [Macromolecules 2000, 33, 243-245], die in einem ersten Schritt Monomere des Typs A1 und C1 statistisch copolymerisieren und daraufhin isoliert werden können oder direkt zur anschließenden Polymerisation von Monomer B1 genutzt werden.

Zur Herstellung einer Haftklebemasse werden die bisher beschriebenen Blockcopolymere in Lösung oder aus der Schmelze weiterverarbeitet. Als Lösungsmittel eignen sich ein oder mehrere organische Lösungsmittel. Zur Herstellung eines Haftklebebandes muss das Blockcopolymer mit Harzen modifiziert werden. Als Harze sind beispielsweise Terpen-, Terpenphenolharze, $C_5$- und $C_9$-Kohlenwasserstoffharze, Pinen-, Inden- und Kolophoniumharze allein und auch in Kombination miteinander einsetzbar. Prinzipiell lassen sich aber alle in dem entsprechenden Polyacrylat P(B) löslichen Harze verwenden, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Der Gewichtsanteil der Harze am Blockcopolymer beträgt bevorzugt zwischen 0 und 50 %, mehr bevorzugt zwischen 20 und 40 %.

Weiterhin werden im Laufe des Herstellungs- und/oder Verarbeitungsprozesses optional Additive wie Alterungsschutzmittel, Compoundierungsmittel, Lichtschutzmittel, Ozonschutzmittel, Fettsäuren, Weichmacher, Keimbildner, Blähmittel, Beschleuniger und/oder verschiedene Füllstoffe (beispielsweise Ruß, $TiO_2$, Voll- oder Hohlkugeln aus Glas oder anderen Materialien, Keimbildner) zugesetzt.

In einer vorteilhaften Weiterentwicklung werden in P(A/C) lösliche bzw. mit P(A/C) verträgliche Vernetzersubstanzen hinzugegeben. Als Vernetzer eignen sich z.B. Metallchelate, multifunktionelle Isocyanate, multifunktionelle Amine oder multifunktionelle Alkohole. Auch multifunktionelle Acrylate lassen sich vorteilhaft als Vernetzer zusetzen.

In einer vorteilhaften Weiterentwicklung für die Vernetzung mit UV-Licht werden den Blockcopolymeren UV-Photoinitiatoren zugesetzt. Nützliche Photoinitiatoren, welche im erfinderischen Sinne sehr gut zu verwenden sind, sind Benzoinether, wie z.B. Benzoinmethylether und Benzoinisopropylether, substituierte Acetophenone, wie z.B. 2,2-Diethoxyacetophenon (erhältlich als Irgacure 651 von Fa. Ciba Geigy), 2,2-Dimethoxy-2phenyl-1-phenylethanon, Dimethoxyhydroxyacetophenon, substituierte alpha-Ketole, wie z.B. 2-Methoxy-2-hydroxy propiophenon, aromatische Sulfonylchloride, wie z.B. 2-Naphthyl sulfonylchlorid, und photoaktive Oxime, wie z.B. 1-Phenyl-1,2-propandion-2-(o-ethoxycarbonyl)oxim.

Das erfindungsgemäße Verfahren ist für die Herstellung von Klebebändern, zeichnet sich dadurch aus, daß die Haftklebemasse aus der Schmelze heraus weiterverarbeitet wird, daß sie insbesondere auf einen Träger aufgetragen wird.

Als Trägermaterial, beispielsweise für Klebebänder, lassen sich hierbei die dem Fachmann geläufigen und

üblichen Materialien, wie Folien (Polyester, PET, PE, PP, BOPP, PVC), Vliese, Schäume, Gewebe und Gewebefolien sowie Trennpapier (Glassine, HDPE, LDPE) verwenden. Diese Aufzählung ist nicht abschließend.

Die Vernetzung der erfindungsgemäßen Schmelzhaftklebemassen erfolgt durch kurzzeitige UV-Bestrahlung im Bereich von 200 - 400 nm mit handelsüblichen Quecksilber-Hochdruck oder Mitteldrucklampen mit einer Leistung von z.B. 80 bis 200 W/cm oder durch thermische Vernetzung in einem Temperaturbereich zwischen 70 - 140 °C oder durch ionisierende Strahlung, wie z.B. die Elektronenstrahlhärtung. Für die UV-Vernetzung kann es angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.

Die Erfindung betrifft ein Klebeband, wobei die Acrylathaftklebemasse als ein- oder doppelseitiger Film auf einem Träger vorliegt.

Die erfindungsgemäßen Haftklebemassen zeichnen sich durch eine hohe thermische Stabilität mit guten Eigenschaften bezüglich ihrer Wärmescherfestigkeit aus.

Die Erfindung soll im folgenden durch einige Beispiele näher erläutert werden.

In Abhängigkeit von den gewünschten klebtechnischen Eigenschaften der Acrylathotmelts wird eine Auswahl an Acryl- und Vinylmonomeren getroffen. Mengenangaben, Anteile und Prozentanteile sind auf die Gesamtmenge der Monomeren bezogen.

Beispiele

<u>Testmethoden</u>

Die folgenden Testmethoden wurden angewendet, um die klebtechnischen Eigenschaften der hergestellten Haftklebemassen zu evaluieren. Für die Prüfung werden Folien aus Polyethylenglycolterephthalat (Beispiele 1 bis 6) bzw. silikonisierte Trennpapiere (Beispiele 7 bis 12) mit einem Masseauftrag von 50 g/m$^2$ beschichtet.

<u>Scherfestigkeit (Test A1, A2)</u>

Ein 13 mm breiter Streifen des Klebebandes wurde auf eine glatte und gereinigte Stahloberfläche aufgebracht. Die Auftragsfläche betrug 20 mm x 13 mm (Länge x Breite). Anschließend wurde wie folgt vorgegangen:

Test A1: Bei Raumtemperatur wurde ein 2 kg-Gewicht an dem Klebeband befestigt und die Zeit bis zum Abfallen des Gewichtes gemessen.

Test A2: Bei 70 °C wurde ein 1 kg-Gewicht an dem Klebeband befestigt und die Zeit bis zum Abfallen des Gewichtes gemessen.

Die gemessenen Scherstandzeiten sind jeweils in Minuten angegeben und entsprechen dem Mittelwert aus drei Messungen.

<u>180° Klebkrafttest (Test B)</u>

Ein 20 mm breiter Streifen einer auf einer Polyester als Schicht aufgetragenen Acrylathaftklebemasse wurde auf Stahlplatten aufgebracht. Der Haftklebestreifen wurde zweimal mit einem 2 kg Gewicht auf das Substrat aufgedrückt. Das Klebeband wurde anschließend sofort mit 300 mm/min und im 180°-Winkel vom Substrat abgezogen. Die Stahlplatten wurden zweimal mit Aceton und einmal mit Isopropanol gewaschen. Alle Messungen wurden bei Raumtemperatur unter klimatisierten Bedingungen durchgeführt. Die Messergebnisse sind in N/cm angegeben und sind gemittelt aus drei Messungen.

<u>Herstellung der Proben</u>

Die verwendeten Acrylate, Methacrylate und Styrol sind kommerziell erhältlich. Benzoinacrylat wurde gemäß DE 27 43 979 A1 hergestellt. Die Monomere wurden vor dem Einsatz destillativ gereinigt.

<u>Herstellun des Trithiocarbonats:</u>

Als Regler wurde folgendes Trithiocarbonat (V) gemäß Macromolecules 2000, 33, 243-245 und Synth. Commun. 1988, 18, 1531-1536 hergestellt.

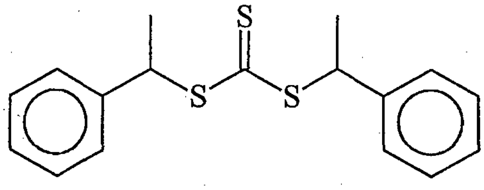

(V)

Durchführung der Polymerisationen

Beispiel 1

In einem 500 ml Schlenkgefäß wurden 400 ml Acrylsäure, 3,47 g des Trithiocarbonates (V) (0,01172 mol) Butylacrylat und 0,06 g Azoisobutyronitril (AIBN) eingefüllt, das Gefäß dreimal entgast und dann unter Argon die Polymerisation durchgeführt. Zur Initiierung wurde auf 65 °C hochgeheizt und unter Rühren 24 h polymerisiert. Zur Isolierung wurde auf RT abgekühlt und dann via GPC analysiert. ($M_n$ = 40200, $M_{w/n}$ = 1,24).

Anschließend wurde ein konventioneller Polymerisationsreaktor mit 32 g Trithiocarbonatfunktionalisierter Polyacrylsäure, 357 g n-Butylacrylat und 0,12 g Azoisobutyronitril (AIBN) befüllt. Nach 20 Minuten Durchleiten von Argon und zweimaligen Entgasen wurde der Reaktor unter Rühren auf 65 °C hochgeheizt und für 24 h bei dieser Temperatur gehalten.

Zur Isolierung wurde auf RT abgekühlt und via GPC analysiert. ($M_n$ = 201000, $M_{w/n}$ = 1,43).

Das Blockcopolymer wurde mit 50 g/m$^2$ auf ein silikonisiertes Trennpapier ausgestrichen und anschließend bei 120 °C für 15 Minuten getrocknet. Zur Analyse der klebtechnischen Eigenschaften wurden die Testmethoden A und B durchgeführt.

Vergleichsbeispiel 2

Ein für radikalische Polymerisationen konventioneller Reaktor wurde mit 40 g Acrylsäure, 360 g 2-Ethylhexylacrylat und 266 g Aceton/Isopropanol (90:10) befüllt. Nachdem 45 Minuten Stickstoffgas unter Rühren durch die Reaktionslösung geleitet worden war, wurde der Reaktor auf 58 °C geheizt und 0,4 g AIBN [2,2'-Azobis(2-methylbutyronitril)] hinzugegeben. Anschließend wurde das äußere Heizbad auf 75 °C erwärmt und die Reaktion konstant bei dieser Außentemperatur durchgeführt. Nach 2 h erfolgte die nächste Zugabe von 0,4 g AIBN [2,2'-Azobis(2-methylbutyronitril)]. Nach 4 und 8 h wurde mit jeweils 200 g Aceton/Isopropanol-Gemisch (90:10) verdünnt. Nach 36 h Reaktionszeit wurde die Polymerisation abgebrochen und das Reaktionsgefäß auf Raumtemperatur abgekühlt. Das Blockcopolymer wurde mit 50 g/m$^2$ auf ein silikonisiertes Trennpapier ausgestrichen und anschließend bei 120 °C für 15 Minuten getrocknet. Zur Analyse der klebtechnischen Eigenschaften wurden die Testmethoden A und B durchgeführt.

Beispiel 3

Es wurde analog Beispiel 1 vorgegangen. Das Polymer wurde in Toluol mit 0,6 Gew.-% Alumiunium-(III)-acetylacetonat abgemischt und mit 50 g/m$^2$ Masseauftrag auf einen mit Saran geprimerten 23 $\mu$m dicken PET-Träger aufgetragen und 15 Minuten bei 120 °C getrocknet. Zur Analyse der klebtechnischen Eigenschaften wurden die Testmethoden A und B durchgeführt.

Vergleichsbeispiel 4

Es wurde analog Beispiel 2 vorgegangen. Das Polymer wurde in Toluol mit 0,6 Gew.-% Alumiunium-(III)-acetylacetonat abgemischt und mit 50 g/m$^2$ Masseauftrag auf einen mit Saran geprimerten 23 $\mu$m dicken PET-Träger aufgetragen, und 15 Minuten bei 120 °C getrocknet. Zur Analyse der klebtechnischen Eigenschaften wurden die Testmethoden A und B durchgeführt.

Beispiel 5

In einem 500 ml Schlenkgefäß wurden 396 g Styrol und 4 g Benzoinacrylat und 3,47 g des Trithiocarbonates (V) (0,01172 mol) eingefüllt, das Gefäß dreimal entgast und dann unter Argon die Polymerisation durchgeführt. Zur Initiierung wurde auf 110 °C hochgeheizt und unter Rühren 30 h polymerisiert. Zur Isolierung wurde auf RT abgekühlt,

das Polymer in 1000 ml Dichlormethan gelöst und dann in 7,5 L Methanol unter starkem Rühren gefällt. Der Niederschlag wurde über eine Fritte abfiltriert und dann via GPC analysiert ($M_n$ = 33200, $M_{w/n}$ = 1,43).

Ein für radikalische Polymerisationen konventioneller Reaktor wurde mit 32 g des zuvor hergestellten Polymers, 357 g n-Butylacrylat und 0,12 g Azoisobutyronitril (AIBN) befüllt. Nach 20 Minuten Durchleiten von Argon und zweimaligen Entgasen wurde der Reaktor unter Rühren auf 60 °C hochgeheizt und für 24 h bei dieser Temperatur gehalten.

Zur Isolierung wurde das Blockcopolymer auf RT abgekühlt und via GPC analysiert ($M_n$ = 188000, $M_{w/n}$ = 1,56).

Das Blockcopolymer wurde mit 50 g/m$^2$ auf ein silikonisiertes Trennpapier ausgestrichen und anschließend bei 120 °C für 15 Minuten getrocknet und anschließend mit 20 m/min mit einem Quecksilber-Mitteldruckstrahler (200 W/cm) mit 2 Durchgängen durch die Lampe bestrahlt. Zur Analyse der klebtechnischen Eigenschaften wurden die Testmethoden A und B durchgeführt.

Beispiel 6

In einem 500 ml Schlenkgefäß wurden 396 g Styrol und 4 g acryliertes Benzophenon (Ebecryl 36™, Fa. UCB) und 3,47 g des Trithiocarbonates (V) (0,01172 mol) eingefüllt, das Gefäß dreimal entgast und dann unter Argon die Polymerisation durchgeführt. Zur Initiierung wurde auf 110 °C hochgeheizt und unter Rühren 30 h polymerisiert. Zur Isolierung wurde auf RT abgekühlt, das Polymer in 1000 ml Dichlormethan gelöst und dann in 7,5 L Methanol unter starkem Rühren gefällt. Der Niederschlag wurde über eine Fritte abfiltriert und dann via GPC analysiert ($M_n$ = 32700, $M_{w/n}$ = 1,46).

Ein für radikalische Polymerisationen konventioneller Reaktor wurde mit 32 g des zuvor hergestellten Polymers, 450 g 2-Ethylhexylacrylat und 0,12 g Azoisobutyronitril (AIBN) befüllt. Nach 20 Minuten Durchleiten von Argon und zweimaligen Entgasen wurde der Reaktor unter Rühren auf 60 °C hochgeheizt und für 24 h bei dieser Temperatur gehalten.

Zur Isolierung wurde das Blockcopolymer auf RT abgekühlt und via GPC analysiert ($M_n$ = 180000, $M_{w/n}$= 1,59).

Das Blockcopolymer wurde mit 50 g/m$^2$ auf ein silikonisiertes Trennpapier ausgestrichen und anschließend bei 120 °C für 15 Minuten getrocknet und anschließend mit 20 m/min mit einem Quecksilber-Mitteldruckstrahler (200 W/cm) mit 2 Durchgängen durch die Lampe bestrahlt. Zur Analyse der klebtechnischen Eigenschaften wurden die Testmethoden A und B durchgeführt.

Verqleichsbeispiel 7

Trithiocarbonat-funktionalisiertes Polystyrol (A):

In einem 500 ml Schlenkgefäß wurden 400 ml Styrol und 3,47 g des Trithiocarbonates (V) (0,01172 mol) eingefüllt, das Gefäß dreimal entgast und dann unter Argon die Polymerisation durchgeführt. Zur Initiierung wurde auf 110 °C hochgeheizt und unter Rühren 30 h polymerisiert. Zur Isolierung wurde auf RT abgekühlt, das Polymer in 1000 ml Dichlormethan gelöst und dann in 7,5 L Methanol unter starkem Rühren gefällt. Der Niederschlag wurde über eine Fritte abfiltriert und dann via GPC analysiert. ($M_n$ = 34200, $M_{w/n}$ = 1,17).

Ein für radikalische Polymerisationen konventioneller Reaktor wurde mit 32 g Trithiocarbonat-funktionalisiertes Polystyrol (A), 357 g n-Butylacrylat und 0,12 g Azoisobutyronitril (AIBN) befüllt. Nach 20 Minuten Durchleiten von Argon und zweimaligen Entgasen wurde der Reaktor unter Rühren auf 60 °C hochgeheizt und für 24 h bei dieser Temperatur gehalten.

Zur Isolierung wurde das Blockcopolymer PS-PBuA-PS auf RT abgekühlt und via GPC analysiert ($M_n$ = 181000, $M_{w/n}$ = 1,39).

Das Blockcopolymer wurde mit 50 g/m$^2$ auf ein silikonisiertes Trennpapier ausgestrichen und anschließend bei 120 °C für 15 Minuten getrocknet. Zur Analyse der klebtechnischen Eigenschaften wurden die Testmethoden A und B durchgeführt.

Resultate

Beispiele 1 bis 4:

In der folgenden Tabelle sind die klebtechnischen Eigenschaften dieser Massen aufgelistet.

| Tabelle 1 | | | |
|---|---|---|---|
| Beispiel | SSZ RT /A1 | SSZ 70 °C /A2 | KK-Stahl [N/cm] /B |
| 1 | 1823 | 597 | 5,0 |
| 2 | 2 | 8 | 5,8 |
| 3 | +10000 | +10000 | 3,6 |
| 4 | +5436 | 4884 | 3,8 |
| Masseauftrag: 50g/$m^2$<br>SSZ: Scherstandzeiten [min]<br>RT: Raumtemperatur<br>KK: Klebkraft auf Stahl | | | |

Die Beispiele in Tabelle 1 belegen, daß durch die Blockstruktur die Kohäsion der Klebemassen auch ohne zusätzliche physikalische Vernetzung ansteigt. Beispiel 1 und Beispiel 2 belegen dies. Die Referenz Beispiel 2 wurde konventionell über eine statistische Copolymerisation von Butylacrylat und Acrylsäure hergestellt. Durch den hohen Anteil Isopropanol im Lösemittel wurde das Molekulargewicht abgesenkt, so daß die Gewichtsmittel von Beispiel 1 und 2 etwa miteinander vergleichbar sind. Durch die Domänenbildung der Polyacrylsäure in Beispiel 1 steigt die Kohäsion der Haftklebemasse schon deutlich an. Durch die fehlende Vernetzung besitzt Beispiel 2 nahezu keine Kohäsion. In den Beispielen 3 und 4 wurden die Beispiele 1 und 2 thermisch mit einem Aluminiumchelat vernetzt, wobei die Vernetzerkonzentration konstant gehalten wurde. Durch die weitere Vernetzung der Hartdomänen durch chemische Bindungen steigt insbesondere die Wärmescherfestigkeit der Haftklebemasse (s. Beispiel 3). Durch die zusätzliche Vernetzung mit Aluminiumchelat steigt auch die Kohäsion von Beispiel 2, wenn auch nicht das Scherfestigkeitsniveau des Blockcopolymers erreicht wird. Die Klebkräfte auf Stahl korrelieren jeweils mit der Härte der einzelnen Haftklebemassen

Beispiele 5 - 7:

In der folgenden Tabelle 2 sind die klebtechnischen Eigenschaften dieser Beispiele aufgelistet.

| Tabelle 2 | | | |
|---|---|---|---|
| Beispiel | SSZ RT /A1 | SSZ 70 °C /A2 | KK-Stahl [N/cm] /B |
| 5 | +10000 | +10000 | 2,7 |
| 6 | +10000 | +10000 | 2,8 |
| 7 | 807 | 164 | 2,6 |
| Masseauftrag: 50g/$m^2$<br>SSZ: Scherstandzeiten [min]<br>RT: Raumtemperatur<br>KK: Klebkraft auf Stahl | | | |

Die Beispiele 5 - 7 demonstrieren, daß auch mit UV-Photoinitiatoren die harten Endblöcke nochmals stabilisert werden können. Dies gilt wiederum für die Wärmescherfestigkeit der Haftklebemassen. Die Referenz Beispiel 7 besitzt bei 70 °C eine nur sehr geringe Kohäsion. Implementiert man dagegen UV-Fotoinitiatoren in die harten Endblöcke und vernetzt diese mit UV-Licht, so steigt die innere Festigkeit dieser harten Domänen deutlich an und erhöht somit die Scherfestigkeit - insbesondere die Wärmescherfestigkeit - der Haftklebemassen, wie aus den Beispielen 5 und 6 zu entnehmen ist.

**Patentansprüche**

1. Verfahren zur Herstellung eines Haftklebebandes mit einer Haftklebemasse auf Basis von Blockcopolymeren des allgemeinen Typs P(A/C)-P(B)-P(A/C), wobei jedes Blockcopolymer aus einem mittleren Copolymerblock P(B) und zwei Endpolymerblöcken P(A/C) besteht, wobei

• P(B) einen (Co-)Polymerblock repräsentiert, erhältlich aus einer Komponente B, welche aus zumindest einem Monomer B1 besteht, wobei die Glasübergangstemperatur des (Co-)Polymerblocks P(B) nicht höher als 0 °C ist,
• P(A/C) einen Copolymerblock repräsentiert, erhältlich aus einer Komponente A/C, welche aus zumindest zwei Monomeren A1 und C1 besteht, wobei der Copolymerblock P(A/C) eine Glasübergangstemperatur von 20 °C bis 175 °C besitzt, und wobei das zumindest eine Monomer C1 zumindest eine zur Vernetzung befähigte funktionelle Gruppe enthält,
• der (Co-)Polymer-Block P(B) in dem Copolymerblock P(A/C) unlöslich ist, die (Co-)Polymerblöcke P(A/C) und P(B) nicht mischbar sind,

**dadurch gekennzeichnet, daß**

• die Blockcopolymere durch Polymerisation über den "Reversible Addition-Fragmentation Chain Transfer" (RAFT) - Mechanismus hergestellt werden, sowie
• den Blockcopolymeren Harze beigemischt werden, welche in Polyacrylaten löslich sind.
• die Haftklebemasse auf einen Träger aufgetragen wird.

2. Verfahren nach Anspruch 1, **dadurch gekennzeichnet, daß** als Harze Terpenharze, Terpenphenolharze, $C_5$- und $C_9$-Kohlenwasserstoffharze, Pinen-, Inden- und/oder Kolophoniumharze eingesetzt werden.

3. Verfahren nach zumindest einem der vorangehenden Ansprüche, **dadurch gekennzeichnet, daß** die Harze zu einem Gewichtsanteil von bis zu 50 Gew.-%, bevorzugt zwischen 20 und 40 Gew.-%, bezogen auf die Blockcopolymere, vorliegen.

4. Verfahren nach Anspruch 1, **dadurch gekennzeichnet, daß** die zur Vernetzung befähigte Gruppe des zumindest einen Monomers C1 eine ungesättigte Gruppe ist, welche zur strahlenchemischen Vernetzung befähigt ist, insbesondere zu einer Vernetzung, welche durch UV-Bestrahlung oder durch Bestrahlung mit Elektronenstrahlen hervorgerufen wird.

5. Verfahren nach zumindest einem der vorangehenden Ansprüche, **dadurch gekennzeichnet, daß** die zur Vernetzung befähigte funktionelle Gruppe des zumindest einen Monomers C1 ein ungesättigter Alkylrest ist, welcher mindestens eine C-C-Doppelbindung aufweist.

6. Verfahren nach Anspruch 1, **dadurch gekennzeichnet, daß** die zur Vernetzung befähigte funktionelle Gruppe des zumindest einen Monomers C1 eine solche Gruppe ist, welche durch den Einfluß thermischer Energie zu einer Vernetzungsreaktion befähigt ist.

7. Verfahren nach zumindest einem der vorangehenden Ansprüche, **dadurch gekennzeichnet, daß** die zur Vernetzung befähigte funktionelle Gruppe des zumindest einen Monomers C1 eine Hydroxy-, eine Carboxy- , eine Epoxy-, eine Säureamid-, eine Isocyanato- oder eine Aminogruppe ist.

8. Verfahren nach zumindest einem der vorangehenden Ansprüche, **dadurch gekennzeichnet, daß** für die Komponente A/C im Sinne des Monomers C1 zumindest eine Verbindung eingesetzt wird, welche die Glasübergangstemperatur des Copolymer-Blocks P(A/C) auf $T_G$ > 20 °C heraufsetzt.

9. Verfahren nach Anspruch 1, **dadurch gekennzeichnet, daß** für die Komponente B zumindest ein Monomer B1 entsprechend der folgenden allgemeinen Formel

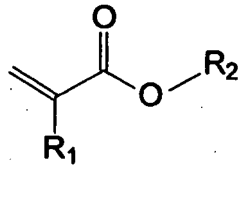

eingesetzt wird, wobei $R_1$ = H oder $CH_3$ und $R_2$ aus der Gruppe der verzweigten oder unverzweigten, gesättigten Alkylgruppen mit 4 -14 Kohlenstoffatomen gewählt wird.

10. Verfahren nach zumindest einem der vorangehenden Ansprüche, **dadurch gekennzeichnet, daß** für die Komponente A/C bevorzugt Monomere A1 und C1 derart gewählt werden, daß die entstehenden Copolymerblöcke P(A/C) in der Lage sind, eine Zwei-Phasen Domänenstruktur mit den Copolymer-Blöcken P(B) auszubilden.

11. Verfahren nach zumindest einem der vorangehenden Ansprüche, **gekennzeichnet durch** ein mittleres Molekulargewicht zwischen 5.000 und 600.000 g/mol, insbesondere zwischen 10.000 und 300.000 g/mol.

12. Verfahren nach zumindest einem der vorangehenden Ansprüche, **dadurch gekennzeichnet, daß** der Anteil der Copolymerblöcke P(A/C) zwischen 10 und 60 Gew.-%, insbesondere zwischen 15 und 40 Gew.-% des gesamten Blockcopolymers liegt.

13. Verfahren nach zumindest einem der Ansprüche 2 bis 10, **dadurch gekennzeichnet, daß** der Gewichtsanteil des Monomers C1 im Verhältnis zum Monomer A1 zwischen 0,1 und 20, insbesondere zwischen 0,5 und 10 liegt.

14. Verfahren nach zumindest einem der vorangehenden Ansprüche, **dadurch gekennzeichnet, daß** bis zu 50 Gew.-%, insbesondere 20 bis 40 Gew.-% Harze, und/oder daß Additive, insbesondere Vernetzer, Alterungsschutzmittel, Lichtschutzmittel, Ozonschutzmittel, Fettsäuren, Weichmacher, Keimbildner, Blähmittel, Beschleuniger und/oder Füllmittel zugesetzt sind.

15. Verfahren nach zumindest einem der vorangehenden Ansprüche, **dadurch gekennzeichnet, dass** die Haftklebemasse mit ultravioletter oder ionisierender Strahlung vernetzt wird.

## Claims

1. Process for preparing a pressure sensitive adhesive tape having a pressure sensitive adhesive based on block copolymers of the general type P(A/C)-P(B)-P(A/C), each block copolymer being composed of one middle copolymer block P(B) and two end polymer blocks P(A/C), wherein

    • P(B) represents a (co)polymer block obtainable from a component B which is composed of at least one monomer B1, the glass transition temperature of the (co)polymer block P(B) being not higher than 0°C,
    • P(A/C) represents a copolymer block obtainable from a component A/C which is composed of at least two monomers A1 and C1, the copolymer block P(A/C) possessing a glass transition temperature of from 20°C to 175°C, and at least one monomer C1 contains at least one functional group which is capable of crosslinking,
    • the (co)polymer block P(B) is insoluble in the copolymer block P(A/C), the (co)polymer blocks P(A/C) and P(B) are immiscible, **characterized in that**
    • the block copolymers are prepared by polymerization via the Reversible Addition-Fragmentation Chain Transfer (RAFT) mechanism, and
    • resins that are soluble in polyacrylates are admixed to the block copolymers;
    • the pressure sensitive adhesive is applied to a backing.

2. Process according to Claim 1, **characterized in that** resins used are terpene resins, terpenephenolic resins, $C_5$ and $C_9$ hydrocarbon resins, pinene resins, indene resins and/or rosins.

3. Process according to at least one of the preceding claims, **characterized in that** the resins are present at a weight fraction of up to 50% by weight, preferably between 20 and 40% by weight, based on the block copolymers.

4. Process according to Claim 1, **characterized in that** the crosslinking-capable group of the at least one monomer C1 is an unsaturated group which is capable of radiation-chemical crosslinking, in particular by crosslinking which is brought about by UV irradiation or by irradiation with electron beams.

5. Process according to at least one of the preceding claims, **characterized in that** the crosslinking-capable functional group of the at least one monomer C1 is an unsaturated alkyl radical which contains at least one C-C double bond.

6. Process according to Claim 1, **characterized in that** the crosslinking-capable functional group of the at least one monomer C1 is a group which is capable of a crosslinking reaction by virtue of the influence of thermal energy.

7. Process according to at least one of the preceding claims, **characterized in that** the crosslinking-capable functional group of the at least one monomer C1 is a hydroxyl, a carboxyl, an epoxy, an acid amide, an isocyanato or an amino group.

8. Process according to at least one of the preceding claims, **characterized in that** for component A/C, as the monomer C1, use is made of at least one compound which raises the glass transition temperature of the copolymer block P(A/C) to $T_G$ > 20°C.

9. Process according to Claim 1, **characterized in that** for component B use is made of at least one monomer B1 in accordance with the following general formula

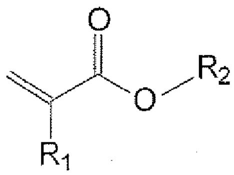

where $R_1$ = H or $CH_3$ and $R_2$ is selected from the group of the branched or unbranched, saturated alkyl groups having 4 - 14 carbon atoms.

10. Process according to at least one of the preceding claims, **characterized in that** for component A/C, monomers A1 and C1 are preferably selected such that the resultant copolymer blocks P(A/C) are capable of forming a two-phase domain structure with the copolymer blocks P(B).

11. Process according to at least one of the preceding claims, **characterized by** an average molecular weight of between 5000 and 600 000 g/mol, in particular between 10 000 and 300 000 g/mol.

12. Process according to at least one of the preceding claims, **characterized in that** the fraction of the (co)polymer blocks P(A/C) lies between 10 and 60% by weight, in particular between 15 and 40% by weight, of the entire block copolymer.

13. Process according to at least one of Claims 2 to 10, **characterized in that** the weight fraction of the monomer C1 in relation to the monomer A1 lies between 0.1 and 20, in particular between 0.5 and 10.

14. Process according to at least one of the preceding claims, **characterized in that** up to 50% by weight, in particular from 20 to 40% by weight, of resins, and/or **in that** additives, especially crosslinkers, aging inhibitors, light stabilizers, ozone protectants, fatty acids, plasticizers, nucleators, blowing agents, accelerators and/or fillers, have been added.

15. Process according to at least one of the preceding claims, **characterized in that** the pressure sensitive adhesive is crosslinked with ultraviolet or ionizing radiation.

**Revendications**

1. Procédé de fabrication d'une bande adhésive comprenant une masse adhésive à base de copolymères séquencés de type général P(A/C)-P(B)-P(A/C), chaque copolymère séquencé étant constitué par une séquence copolymère centrale P(B) et deux séquences polymères terminales P(A/C),

   - P(B) représentant une séquence (co)polymère qui peut être obtenue à partir d'un composant B, qui est constituée par au moins un monomère B1, la température de transition vitreuse de la séquence (co)polymère P(B) n'étant pas supérieure à 0 °C,
   - P(A/C) représentant une séquence copolymère qui peut être obtenue à partir d'un composant A/C, qui est constituée par au moins deux monomères A1 et C1, la séquence copolymère P(A/C) présentant une température de transition vitreuse de 20 °C à 175 °C, et ledit au moins un monomère C1 contenant au moins un groupe fonctionnel apte à la réticulation,
   - la séquence (co)polymère P(B) étant insoluble dans la séquence copolymère P(A/C), les séquences (co)polymères P(A/C) et P(B) n'étant pas miscibles, **caractérisé en ce que**

- les copolymères séquencés sont fabriqués par polymérisation par le mécanisme « Reversible Addition-Fragmentation Chain Transfer » (RAFT), et
- des résines solubles dans les polyacrylates sont incorporées dans les copolymères séquencés,
- la masse adhésive est appliquée sur un support.

**2.** Procédé selon la revendication 1, **caractérisé en ce que** des résines de terpène, des résines de terpènephénol, des résines hydrocarbonées en $C_5$ et $C_9$, des résines de pinène, d'indène et/ou de colophane sont utilisées en tant que résines.

**3.** Procédé selon au moins l'une quelconque des revendications précédentes, **caractérisé en ce que** les résines sont présentes en une proportion en poids de jusqu'à 50 % en poids, de préférence comprise entre 20 et 40 % en poids, par rapport aux copolymères séquencés.

**4.** Procédé selon la revendication 1, **caractérisé en ce que** le groupe apte à la réticulation dudit au moins un monomère C1 est un groupe insaturé, qui est apte à la réticulation chimique par rayonnement, notamment à une réticulation qui est déclenchée par exposition à un rayonnement UV ou par une exposition à des faisceaux d'électrons.

**5.** Procédé selon au moins l'une quelconque des revendications précédentes, **caractérisé en ce que** le groupe fonctionnel apte à la réticulation dudit au moins un monomère C1 est un radical alkyle insaturé qui comprend au moins une double liaison C-C.

**6.** Procédé selon la revendication 1, **caractérisé en ce que** le groupe fonctionnel apte à la réticulation dudit au moins un monomère C1 est un groupe qui est apte à une réaction de réticulation sous l'effet d'énergie thermique.

**7.** Procédé selon au moins l'une quelconque des revendications précédentes, **caractérisé en ce que** le groupe fonctionnel apte à la réticulation dudit au moins un monomère C1 est un groupe hydroxy, carboxy, époxy, amide d'acide, isocyanato ou amino.

**8.** Procédé selon au moins l'une quelconque des revendications précédentes, **caractérisé en ce qu'**au moins un composé qui augmente la température de transition vitreuse de la séquence copolymère P(A/C) à $T_G > 20$ °C est utilisé pour le composant A/C au sens du monomère C1.

**9.** Procédé selon la revendication 1, **caractérisé en ce qu'**au moins un monomère B1 selon la formule générale suivante

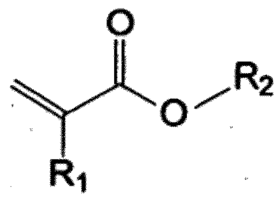

est utilisé pour le composant B, avec $R_1$ = H ou $CH_3$ et $R_2$ étant choisi dans le groupe constitué par les groupes alkyle saturés ramifiés ou non ramifiés de 4 à 14 atomes de carbone.

**10.** Procédé selon au moins l'une quelconque des revendications précédentes, **caractérisé en ce que** des monomères A1 et C1 tels que les séquences copolymères P(A/C) formées soient en mesure de former une structure de domaine biphasé avec les séquences copolymères P(B) sont utilisés de préférence pour le composant A/C.

**11.** Procédé selon au moins l'une quelconque des revendications précédentes, **caractérisé par** un poids moléculaire moyen compris entre 5 000 et 600 000 g/mol, notamment entre 10 000 et 300 000 g/mol.

**12.** Procédé selon au moins l'une quelconque des revendications précédentes, **caractérisé en ce que** la proportion des séquences copolymères P(A/C) est comprise entre 10 et 60 % en poids, notamment entre 15 et 40 % en poids du copolymère séquencé total.

**13.** Procédé selon au moins l'une quelconque des revendications 2 à 10, **caractérisé en ce que** la proportion en poids du monomère C1 par rapport au monomère A1 est comprise entre 0,1 et 20, notamment entre 0,5 et 10.

14. Procédé selon au moins l'une quelconque des revendications précédentes, **caractérisé en ce que** jusqu'à 50 % en poids, notamment 20 à 40 % en poids, de résines et/ou d'additifs, notamment des agents de réticulation, des agents antivieillissement, des agents photoprotecteurs, des agents anti-ozone, des acides gras, des plastifiants, des agents de nucléation, des agents gonflants, des accélérateurs et/ou des charges, sont ajoutés.

15. Procédé selon au moins l'une quelconque des revendications précédentes, **caractérisé en ce que** la masse adhésive est réticulée avec un rayonnement ultraviolet ou ionisant.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9635725 A
- US 5194455 A
- EP 0343467 B1
- DE 2743979 A1
- US 5073611 A
- US 5741543 A
- US 3468972 A
- US 3595941 A
- US 3239478 A
- US 3935338 A
- EP 0451920 B1
- US 5851664 A
- US 251 H1
- US 5314962 A
- EP 0921170 A1
- EP 1008640 A
- WO 9801478 A
- WO 9931144 A


### In der Beschreibung aufgeführte Nicht-Patentliteratur


- *Macromolecules,* 2000, vol. 33, 243-245
- *Synth. Commun.,* 1988, vol. 18, 1531-1536